# EUROPÄISCHE PATENTSCHRIFT

(11) **EP 2 106 685 B1**
(45) Veröffentlichungstag und Bekanntmachung des Hinweises auf die Patenterteilung: **27.04.2011**
(21) Anmeldenummer: 09150148.6
(22) Anmeldetag: 07.01.2009
(51) Int. Cl.: A01D 43/10, A01D 82/02

(54) **Feldhäcksler mit Konditioniereinrichtung**
Forage harvester with conditioning device
Faucheuse-hâcheuse avec un dispositif de conditionnement

(30) Priorität: 04.04.2008 DE 102008017365
(43) Veröffentlichungstag der Anmeldung: 07.10.2009
(73) Patentinhaber: CLAAS Selbstfahrende Erntemaschinen GmbH, 33428 Harsewinkel (DE)
(72) Erfinder: Haffert, Dr., Andreas, 33334, Gütersloh (DE); Bönig, Dr., Ingo, 33330, Gütersloh (DE)

(56) Entgegenhaltungen:
- DE-A1- 19 848 493
- US-A- 5 950 938

## Beschreibung

Die vorliegende Erfindung betrifft einen Feldhäcksler mit einer Konditioniereinrichtung, die zum Anschlagen oder zerkleinern von in Erntegut, insbesondere von Mais, enthaltenen Körnern dient. Wenn das gehäckselte, silierte Erntegut, an Tiere verfüttert wird, ist durch das zerkleinern die Verwertbarkeit der in den Körnern enthaltenen Nährstoffe verbessert.

Die Tendenz zu immer größeren Maschinenbreiten in der Landwirtschaft führt dazu, dass die Konditioniereinrichtungen für Feldhäcksler für immer größere Erntegutclurchsätze ausgelegt werden müssen. Durch die Verwendung eines auseinanderklappbaren Erntegutaufnehmers wie etwa eines Maisgebisses kann die Breite eines Feldhäckslers im Feldeinsatz dessen Breite bei der Fahrt auf einem öffentlichen Verkehrsweg um ein Vielfaches überschreiten. Proportional zur Breite des Maisgebisses nimmt die Menge des Erntegutes, das pro Zeiteinheit geschnitten und aufgenommen werden kann, zu. Die. Breite der Konditioniereinrichtung kann nicht in gleichem Maße gesteigert werden, da sie durch die Karosseriebreite des Feldhäckslers begrenzt ist und ein zu breiter Feldhäcksler nicht mehr am öffentlichen Straßenverkehr teilnehmen dürfte. Es ist daher erforderlich, den Durchsatz der Konditioniereinrichtung bei gleich bleibender Breite zu steigern. In der Praxis hat sich gezeigt, dass dies mit den gegenwärtigen Konzepten zu einer erheblichen Beanspruchung der Konditionierwalzen, insbesondere ihrer Lager, führt. Kurze Standzeiten der Walzen bzw. der Lager sind die Folge.

Ein weiteres Problem der Kanditionäerwalzen für Feldhäcksler hoher Breite, auf das zum Beispiel in DE 198 48 493 A1 hingewiesen wird, ist, dass aufgrund der Notwendigkeit, Erntegut, das an einem rechten oder linken Rand des Erntegutaufnehmers aufgenommen worden ist, zur Mitte des Feldhäckslers zusammenzuführen, um es in die Konditioniereinrichtung einzuspeisen, die Konditionierwalzen einer solcher Konditioniereinrichtung häufig an ihren äußeren Enden stärker beansprucht sind als in der Mitte. Dies führt zu einer ungleichmäßigen Abnützung des Oberflächenprofils der Konditionierwalzen, was ebenfalls eine vorzeitige Erneuerung der Konditionierwalzen erforderlich macht.

Aufgabe der vorliegenden Erfindung ist daher, einen Feldhäcksler zu schaffen, dessen Konditioniereinrichtung trotz eines hohen Erntegutdurchsatzes lange Standzeiten erreicht. Die Aufgabe wird gelöst, indem bei einer Konditioniereinrichtung eines Feldhäckslers mit einer ersten und einer zweiten Walze, die in einem Erntegutkanal angeordnet sind und einen von dem Erntegut durchlaufenen ersten Spalt begrenzen, wenigstens eine dritte, einen zweiten Spalt begrenzende Walze in Querrichtung des Erntegutkanals gegen die zweite Walze versetzt in dem Erntegutkanal angeordnet ist. Diese Anordnung erlaubt es, den Erntegutstrom in dem Kanal in wenigstens zwei Teile aufzuteilen, von denen einer den von der ersten und zweiten Walze begrenzten Spalt und der andere den von der dritten Walze begrenzten Spalt durchläuft. So kann insgesamt eine große Spaltlänge realisiert und damit ein hoher Erntegutdurchsatz erzielt werden. Da sich dieser Durchsatz auf die zwei oder mehr Spalte verteilt, kann die Belastung der Lager der zweiten Walze auf einem praktikablen Maß gehalten werden. Die an den Lagern der zweiten Walze auftretenden Kräfte sind proportional zum Erntegutdurchsatz jedes einzelnen Spalte reduziert, wie zum Beispiel im Falle einer gleichmäßigen Aufteilung des Ernteguts auf zwei Spalte halbiert. Da der Verschleiß der Lager schneller als linear mit den auftretenden Kräften wächst, ist eine Verlängerung der Lebenserwartung der Lager der zweiten Walze auf deutlich mehr als das Doppelte bei ansonsten gegenüber einer herkömmlichen Konditioniereinrichtung unveränderter Bauweise zu erwarten.

Einer einfachen Ausgestaltung zufolge kann die erste Walze den ersten und den zweiten spalt begrenzen. Dies ist vor allem dann eine sinnvolle Lösung, wenn die zweite und die dritte Walze nachgiebig gelagert sind, um ein Auseinanderrücken von zwei denselben Spalt begrenzenden Walzen zu ermöglichten, wenn zum Beispiel ein im Erntegutstrom enthaltener Stein durchgelassen werden muss. Ein nicht nachgiebiges Lager, wie es in diesem Fall an der ersten Walze verwendet werden kann, ist wesentlich weniger störungsanfällig als ein nachgiebiges Lager.

Da in einem solchen Fall die nachgiebig gelagerten Walzen kürzer als die fest gelagerte erste Walze sind, sind sie auch leichter als diese und können daher dem Zusammenstoß mit einem den Spalt passiverenden Stein leichter ausweichen.

Vorzugsweise ist allerdings eine vierte Walze vorgesehen, die mit der dritten Walze den zweiten Spalt begrenzt.

Vorteilhaft ist ferner, dass die zweite und dritte Walze nicht jeweils auf entgegengesetzten Seiten des Erntegutkanals gelagert sind, sondern dass ein Lagerbock, der wenigstens die zweite Walze lagert, eine der zweiten Walze zugewandte Seite und eine von der zweiten Walze abgewandte Seite aufweist und dass das Erntegut auf beiden Seiten des Lagerbocks vorbeiläuft. Dies erlaubt es, für die zweite Walze eine Welle zu verwenden, die deutlich kürzer ist als die Breite des Erntegutkanals. Eine solche Welle kann deutlich dünner und leichter sein als eine den gesamten Erntegutkanal kreuzende Welle gleicher Belastbarkeit.

Zweckmäßigerweise dient der Lagerbock gleichzeitig zur Lagerung der dritten Walze.

Wenn die oben erwähnte vierte Walze vorhanden ist, ist es zweckmäßig, wenn der Lagerbock auch die erste und die vierte Walze lagert.

Einer ersten Ausgestaltung zufolge können wenigstens zwei der von dem Lagerbock gelagerten Walzen eine gemeinsame Drehachse haben.

Dies erlaubt insbesondere, die von dem Lagerbock gelagerte zweite und dritte Walze auf einer gleichen - von dem Lagerbock mehr oder weniger mittig unterstützten - Welle drehfest zu montieren, so dass beide Walzen auf einfache Weise gemeinsam drehangetrieben werden können.

Wenn die zweite und die dritte Walze wie oben beschrieben nachgiebig gelagert sind, ist es hingegen zweckmäßig, dass sie getrennte Wellen haben, um Ausweichbewegungen der beiden Walzen unabhängig voneinander zu ermöglichen.

Alternativ kann es zweckmäßig sein, parallele, aber gegeneinander versetzte Achsen für die zweite und dritte Walze vorzusehen. Da dann die Lager der zweiten und dritten Walze in dem Lagerbock nicht nebeneinander angeordnet sein müssen, kann die Breite des Lagerbocks reduziert werden.

Es kann auch vorteilhaft sein, wenn wenigstens eine der von dem Lagerblock gelagerten Walzen eine schräg zu einer Mittelebene des Erntegutkanals ausgerichtete Achse hat.

Eine Schrägstellung der Achse kann unabhängig von der Zahl der Walzen, insbesondere auch bei einer herkömmliche Konditioniereinrichtung mit einem einzigen Paar von Konditionierwalzen, von Vorteil sein, da sie es ermöglicht, bei vorgegebener Breite des Feldhäckslers den Spalt zwischen den Konditionierwalzen zu verlängern und so den Durchsatz der Konditioniereinrichtung zu erhöhen.

Um zu verhindern, dass Erntegut sich vor dem Lagerbock ansammelt und eine Verstopfung des Erntegutkanals bewirkt, ist dem Lagerbock vorzugsweise im Erntegutkanal ein entgegen der Erntegutförderrichtung zugespitzter Keil vorgelagert.

Wenn den Konditionierwalzen in an sich bekannter Weise eine Häckseltrommel vorgelagert ist, reicht ein Grat des Keils vorzugsweise bis wenigstens in unmittelbare Nähe des Umfangs der Häckseltrommel, so dass Erntegut, welches auf einem der Häckseltrommel zugewandten Grat des Keils hängen bleibt, durch deren Drehung sofort wieder abgestreift wird. Grundsätzlich ist es hierfür ausreichend, wenn der Grat bis auf wenige Zentimeter an den Umfang heranreicht, da Erntegut, das sich auf dem Grat abzulagern beginnt, von der Häckseltrommel sofort wieder abgestreift wird, sobald die Dicke der Ablagerung groß genug ist, um von den Messern erfasst zu werden.

Um das Abstreifen zu erleichtern, ist der Grat des Keils zweckmäßigerweise kreisbogenförmig, wobei vorzugsweise der Mittelpunkt des Kreisbogens mit der Achse der Häckseltrommel zusammenfällt.

Wenn der Keil sich zwischen den Erntegutkanal oben und unten begrenzenden Leitplatten erstreckt, ist es zum Erleichtern des Abstreifens von hängen bleibendem Häckselgut vorteilhaft, wenn ein oberes Ende des Grates über eine der Häckseltrommel zugewandte Vorderseite der oberen Leitplatte zur Häckseltrommel hin vorspringt.

Wie bereits erwähnt, können die Walzen wenigstens eines Paars schräg zu einer Mittelebens des Erntegutkanals ausgerichtete Achsen haben. Zweckmäßigerweise sind diese Achsen so orientiert, dass sie Erntegut, das den Spalt zwischen den Walzen durchläuft, in Richtung der Mittelebene lenken.

Dies erleichtert die Weiterbeförderung des konditionierten Ernteguts, insbesondere wenn den Walzenpaaren ein Sammeltrichter nachgeordnet ist, in dem der Strom des Ernteguts gebündelt wird.

Einer besonders bevorzugten Weiterbildung zufolge sind die Walzen wenigstens eines Paars zu einer Mittelebene des Erntegutkanals hin kegelig verjüngt. Dadurch ist es möglich, einen starken Erntegutstrom an einem seitlichen Rand des Kanals mit einem Walzenabschnitt mit großem Durchmesser zu konditionieren, während ein näher zur Mittellinie liegender, schwächerer Strom von einem schmaleren Abschnitt der Walzen konditioniert wird. Da der Abschnitt mit dem großem Durchmesser eine größere Umfangsgeschwindigkeit hat, ist er in der Lage, den stärkeren Erntegutstrom ohne Gefahr der Verstopfung oder anderweitigen Überlastung zu verarbeiten, und der daraus resultierende Verschleiß verteilt sich auf eine große Umfangsfläche der Walze. Auf diese Weise kann der Verschleiß auf der gesamten Oberfläche der Walzen weitgehend einheitlich gehalten werden, so dass eine Reparatur oder Nachbearbeitung der Walzen erst dann erforderlich wird, wenn deren Oberfläche im wesentlichen komplett abgenutzt ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Draufsicht auf eine Konditioniereinrichtung eines erfindungsgemäßen Feld- häcksler mit vorgelagerter Häckseltrom- mel;
- Fig. 2: einen schematischen Längsschnitt der Kon- ditioniereinrichtung aus Fig. 1,
- Fig. 3: eine perspektivische Ansicht einer Kondi- tioniereinrichtung mit nachgeordnetem Nachbasehleunigar gemäß einer bevorzugten Ausgestaltung der Erfindung;
- Fig. 4: einen schematischen Schnitt analog Fig. 1 gemäß einer weiteren Ausgestaltung der Erfindung;
- Fig. 5: einen zu Fig. 2 analogen Längsschnitt durch die Konditioniereinrichtung der Fig. 4;
- Fig. 6: eine stark schematisierte Darstellung ei- ner vierten Ausgestaltung;
- Fig. 7: eine schematisierte Darstellung einer fünften Ausgestaltung;
- Fig. 8: eine schematisierte Darstellung einer sechsten Ausgestaltung der Konditioniereinrichtung eines er- findungsgemäßen Feldhäckslers; und
- Fig. 9: eine schematische perspektivische Ansicht einer Konditionierein- richtung eines erfindungsgemäßen Feld- häckslers mit drei Walzen.

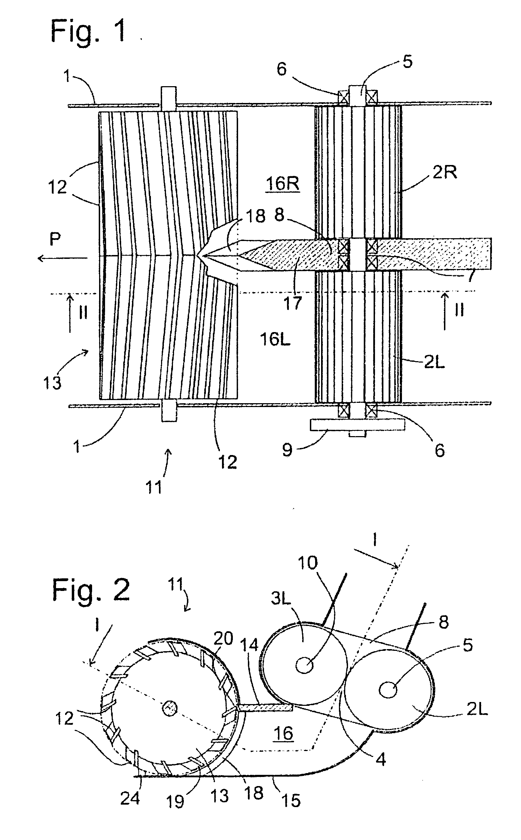

Fig. 1 zeigt einen schematischen schnitt durch eine Konditioniereinrichtung eines erfindungsgemäßen selbstfahrenden Feldbäckslers. Die Konditioniereinrichtung umfasst in einem Gehäuse 1 zwei axial, d.h. in Breitenrichtung das Feldhäckslers, gestaffelt angeordnete Paare von Konditionierwalzen mit jeweils einer oberen beziehungsweise in Bezug auf die Fahrtrichtung des Feldhäckslers hinteren Konditionierwalze 2L bzw. 2R und einer oberen bzw. vorderen Konditionierwalze 3L, 3R. Die schnittebene der Fig. 1, in Fig. 2 mit I-I bezeichnet, verläuft durch einen Spalt 4 zwischen den Konditionierwalzen 2L, 3L bzw. 2R, 3R, so dass in Fig. 1 nur die unteren Konditionierwalzen 2L, 2R zu sehen sind. Die Konditionierwalzen sind Hohlkörper mit einer konturierten Mantelfläche und zwei die Mantelfläche auf ihrer jeweiligen Welle abstützenden, die Stirnflächen der Walzen bildenden Kreisscheiben. Weitere Kreisscheiben können im Innern der Konditionierwalzen axial verteilt sein, um den Mantelflächen die erforderliche Steifigkeit zu verleihen. Die Walzen 2L, 2R des (bezogen auf die Fahrtrichtung P des Feldhäckslers) linken bzw. rechten Paars sind drehfest auf einer gemeinsamen Welle 5 montiert, die sich quer durch das gesamte Gehäuse 1 erstreckt und durch Lager 6 in dessen Seitenwänden sowie ein Lager 7 in einem mittig zwischen den Seitenwänden angeordneten Lagerbock 8 gehalten ist. Die Walzen 2L, 2R sind über die Welle 5 gemeinsam, hier über ein Riemen- oder Kettenrad 9, drehangetrieben. Die oberen Walzen 3L, 3R sind in gleicher Weise auf einer gemeinsamen welle 10 drehfest montiert, die ebenfalls in dem Lagerbock 8 mittig unterstützt ist. Die oberen Konditionierwalzen 3L, 3R können, da sie über die Welle 10 starr verbunden sind, auch als eine einzige, axial gegliederte Walze aufgefasst werden. Analoges gilt für die unteren Konditionierwalzen 2L, 2R.

Die Wellen 5, 10 sind so drehangetrieben, dass die oberen und unteren Konditionierwalzen 3L, 2L bzw. 3R, 2R mit unterschiedlichen Umfangsgeschwindigkeiten rotieren, so dass dem Spalt 4 zwischen den Walzen zugeführtes Erntegut beim Durchgang durch den Spalt zerrieben wird und darin enthaltene Körner zerkleinert werden.

Das dem Spalt 4 zugeführte Erntegut rührt her von einem Häckselwerk 11. Das Häckselwerk 11 hat ein in Fig. 2 nur unvollständig gezeigtes, im wesentlichen zylindrisches Gehäuse, in dem eine drehantreibbare Häckseltrommel 13 mit Messern 12 sowie eine fest stehende Gegenschneide 24 angeordnet sind. Erntegut, das durch eine nicht dargestellte Aufnahmevorrichtung wie etwa ein Maisgebiss geschnitten und dem Häckselwerk 11 zugeführt wird, wird darin durch die Drehung der Häckseltrommel 13 zerkleinert und in einen durch obere und untere Leitplatten 14, 15 sowie die Seitenwände des Gehäuses 1 begrenzten, zu dem Spalt 4 führenden Kanal 16 hinein geschleudert.

Die Häckseltrommel 13 kann als ein im Wesentlichen geschlossener Zylinder ausgeführt sein, der an seiner Mantelfläche mit den Messern 12 besetzt ist. Im hier betrachteten Fall umfasst die Häckseltrommel 13 mehrere auf einer Welle montierte Kreisscheiben, die untereinander über die an ihrem Rand befestigten lang gestreckten Messer 12 verbunden sind. Die Messer haben, wie in Fig. 1 zu sehen, V-förmig verlaufende Schneidkanten, um bereits während des Häckselns das Erntegut zur Mitte des Gehäuses 1 zu treiben.

Der Kanal 16 ist, wie in Fig. 1 gezeigt, durch eine mittige Trennwand 17 in einen linken und einen rechten Teilkanal 16L, 16R gegliedert, die jeweils zu den linken bzw. rechten Konditionierwalzen 2L, 3L bzw. 2R, 3R führen. Zum Häckselwerk 11 hin läuft die Trennwand 17 in einen Keil 18 aus. Ein der Häckseltrommel 13 zugewandter scharfkantiger Grat 19 an der Spitze des Keils 18 hat einen im wesentlichen kreinbogenförmigen, auf die Achse der Häckseltrommel 13 zentrierten Verlauf, so dass, wie in Fig. 1 zu sehen, die Messer 12 der Häckseltrommel 13 in geringem Abstand vor dem Grat 19 entlang streichen. Von der Häckseltrommel 13 auf den Grat 19 geschleudertes und daran hängen gebliebenes Häckselgut wird so durch die Drehung der Messer 12 im Gegenuhrzeigersinn mitgenommen und an einer über eine Vorderkante der oberen Leitplatte 14 zur Häckseltrommel 13 hin vorspringenden Ecke 20 des Grats 19 abgestreift und weiter gehäckzelt. Eine Verstopfung des Kanals 16 durch sich am Keil 18 verfangendes Häckselgut ist so ausgeschlossen.

Einer nicht gezeichneten Abwandlung zufolge können die einander zugewandten Kreisscheiben der Konditionierwalzen 2R, 2L durch ein die Welle 5 mittig verstärkendes Rohrstück verbunden sein. Dies erlaubt es, die Dicke des Lagerbocks 8 zu reduzieren, indem anstelle der in Fig. 1 gezeigten zwei Lager ein einzelnes Lager 7 von größerem Durchmesser vorgesehen wird.

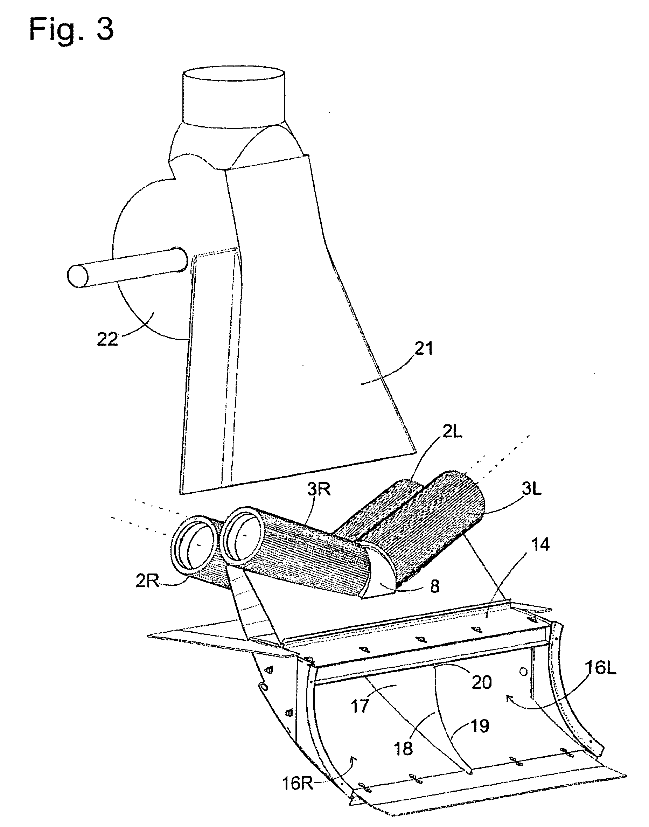

Fig. 3 zeigt eine perspektivische Ansicht einer Konditioniereinrichtung eines erfindungsgemäßen Feldhäckslers gemäß einer weiterentwickelten Ausgestaltung. Das Häckselwerk ist in dieser Ansicht weggelassen, so dass der Eingangsbereich des Kanals 16 bzw. seiner Teilkanäle 16L, 16R und die den Kanal 16 unterteilende, in den Keil 18 auslaufende Trennwand 17 deutlich sichtbar sind. Auch die über die obere Leitplatte 14 vorspringende Ecke 20, über die auf dem Keil 18 hängen gebliebendes Näckselgut abgestreift werden kann, ist gut zu erkennen.

Der wesentliche Unterschied zwischen der Ausgestaltung der Fig. 3 und derjenigen der Figuren 1 und 2 ist, dass die rechten und linken Konditionierwalzen bei der Ausgestaltung der Fig. 3 nicht auf einer gemeinsame Achsen liegen, sondern dass die Achsen der Walzen in Bezug auf eine durch den Grat 19 verlaufende Mittelebene der Konditioniereinrichtung schräg gestellt sind. Eine Folge dieser Schrägstellung ist eine keilförmige, nach oben und nach hinten verjüngte Gestalt des die Wellen der Walzen 2L, 2R, 3L, 3R tragenden Lagerbocks 8. Eine Nutzwirkung der Schrägstellung der Achsen liegt darin, dass Erntegut beim Durchgang durch den Spalt 4 nicht nur nach oben und nach hinten, sondern auch in Richtung der Mittelebene beschleunigt wird, so dass sich die Breite des Erntegutstroms verringert und dieser in einen auf den Spalt 4 folgenden Sammeltrichter 21 mit geringem Verlust an Bewegungsenergie gebündelt und einem Nachbeschleuniger 22 zugeführt wird. Der Nachbeschleuniger 22 dient in an sich bekannter Weise dazu, das Erntegut so weit zu beschleunigen, dass es einen hier nicht dargestellten Auswurfkrümmer passieren und über diesen einen Sammelbehälter in einem neben dem Feldhäcksler herfahrenden Hilfsfahrzeug erreichen kann.

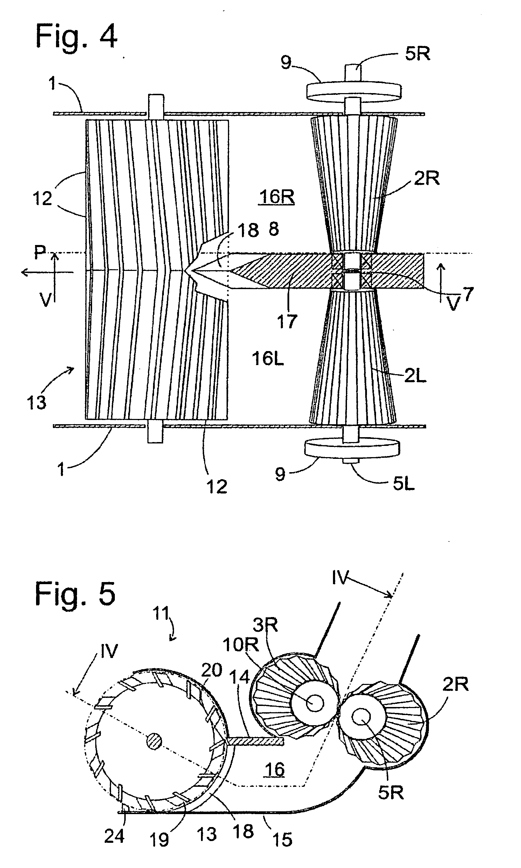

Wie bereits eingangs erwähnt, ist die Breite der Konditioniereinrichtung und des ihr vorgelagerten Häckselwerks 11 bei einem modernen Feldhäcksler häufig erheblich geringer als die einer Erntegutaufnahmevorrichtung, die das Häckselwerk 11 und die Konditioniereinrichtung mit Erntegut versorgt. Es ist daher notwendig, den auf einer großen Breite von der Erntegutaufnahmevorrichtung aufgenommenen Erntegutstrom zurächst zu bündeln, um ihn dem Häckselwerk 11 zuführen zu können. Dies hat zur Folge, dass der Strom des Häckselguts, der an den Konditionierwalzen 2L, 2R, 3L, 3R eintrifft, jeweils an deren äußeren Enden erheblich stärker sein kann als an ihren einander zugewandten inneren Enden. Einer solchen ungleichmäßigen Verteilung des Erntegutstroms trägt die in Fig. 4 und 5 dargestellte Ausgestaltung der Konditioniereinrichtung Rechnung, indem sie anstelle der in den ersten beiden Ausgestaltungen vorgesehenen zylindrischen Konditionierwalzen konische, jeweils zur Mittelebene beziehungsweise dem Lagerbock 8 in der Mitte des Gehäuses 1 konisch verjüngte Konditionierwalzen verwendet. Um eine gleichbleibende Breite des Spalts 4 zwischen den oberen (vorderen) Walzen 3L, 3R und den unteren (hinteren) Walzen 2L, 2R zu gewährleisten, muss wenigstens eine der Wellen 5, 10 (hier die Welle 5) in zwei jeweils separat im Lagerbock 8 gelagerte Teilwellen 5L, 5R mit einander kreuzenden Achsen aufgeteilt sein. Vorzugsweise ist die welle 10 der Walzen 3L, 3R in gleicher Weise geteilt. Die beiden Teilwellen 5L, 5R sind jeweils getrennt über seitlich angeordnete Kettenräder 9 angetrieben.

Die Folge der Konizität der Walzen 2L, 2R, 3L, 3R ist, dass der Durchsatz des Spalts 4 vom Lagerbock 8 zu den Seitenwänden des Gehäuses 1 hin größer wird, passend zu dem zu den Seitenwänden hin erhöhten Aufkommen an Häckselgut. Aufgrund des nach außen hin zunehmende Umfangs der Könditionierwalzen 2L, 2R, 3L, 3R verteilt sich auch der Verschleiß auf eine größere Oberfläche, das heißt die zur Verfügung stehende Walzenoberfläche ist über die gesamte axiale Ausdehnung der Walzen hinweg im wesentlichen proportional zum Aufkommen an Häckselgut, so dass eine auf der gesamten Oberfläche der Walzen 2L, 2R, 3L, 3R im wesentlichen gleichmäßige Abnutzung resultiert. Es ist daher nicht notwendig, die Walzen 2L, 2R, 3L, 3R vorzeitig auszutauschen oder zu überarbeiten, weil ein Teil ihres Umfangs - profils abgenutzt ist, während ein anderer Teil noch brauchbar wäre.

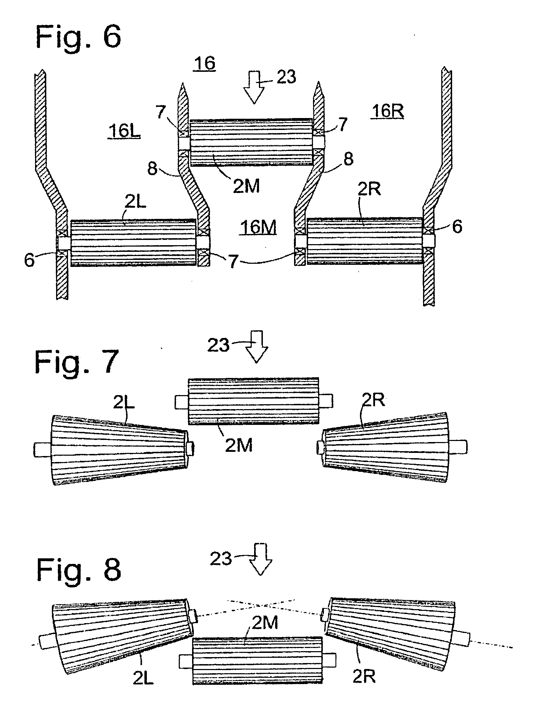

Das Prinzip der Erfindung bietet sich an für diverse weitere Abwandlungen. So zeigt Fig. 6 einen schematischen Schnitt durch eine Konditioniereinrichtung, bei der der Erntegutkanal 16 durch zwei Lagerböcke 8 in drei Teilkanäle 16L, 16M, 16R mit jeweils einem Paar von Konditionierwalzen unterteilt ist. Die Lager 6, 7, die die drei jeweils gleich breiten Konditionierwalzen 2L, 2M, 2R tragen, sind daher jeweils nur einem Drittel der Belastung ausgesetzt, die das Lager einer sich über den gesamten Kanal 16 erstreckende Konditionierwalze zu tragen hätte.

Die drei Walzen sind quer zu der durch einen Pfeil 23 angedeuteten Förderrichtung des Ernteguts versetzt angeordnet, so dass es möglich ist, die beiden äußeren Teilkanäle 16L, 16R, in denen die Walzen 2L, 2R angeordnet sind, konvergierend zu führen und so die Gesamtbreite des Kanals 16 bereits vor dem Übergang zum Sammeltrichter 22 zu reduzieren.

Fig. 7 veranschaulicht schematisch eine weitere Ausgestaltung mit drei Walzenpaaren, von denen wiederum jeweils nur die unteren 2L, 2M, 2R gezeigt sind. Von diesen sind die beiden äußeren, 2L, 2R, zur Mitte hin verjüngt, um einer eventuell ungleichmäßigen Verteilung des Erntegutstroms Reichnung zu tragen, während die mittlere, 2M, zylindrisch ist . Die Seitenwände des Gehäuses 1 und die zwei Lagerböcke 8, in denen die Walzen gelagert sind, sind in Fig. 7 der Übersichtlichkeit halber weggelassen.

Fig. 8 zeigt eine weitere Abwandlung in einer zur Fig. 7 analogen schematischen Darstellung. Wiederum sind drei Paare von Konditionierwalzen vorgesehen, von denen jeweils die äußeren Paare, dargestellt anhand ihrer unteren Walzen 2L, 2R, konisch und das mittlere Paar, repräsentiert durch 2M, zylindrisch ist. Indem hier die konischen äußeren Walzen 2L, 2R der mittleren 2M vorgelagert und schräg gestellt sind, kann die Baulänge der Konditioniereinrichtung reduziert werden.

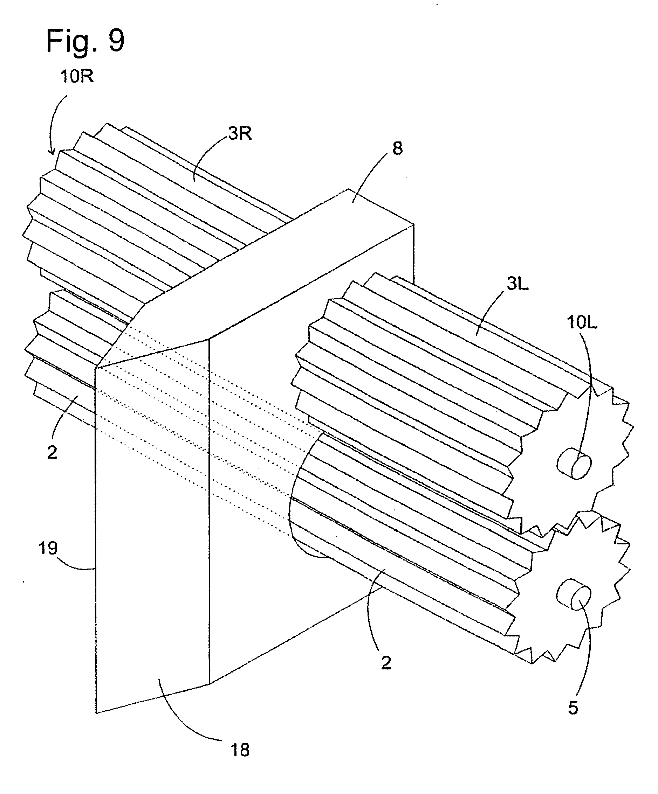

Die in Fig. 9 in einer perspektivischen Ansicht gezeigte Konditioniereinrichtung unterscheidet sich von der Ausgestaltung der Fig. 1 und 2 in erster Linie dadurch, dass anstelle der zwei unteren Walzen 2L, 2R eine einzige Walze 2 vorgesehen ist, die sich über die gesamte Breite des (in Fig. 9 nicht gezeigten) Gehäuses 1 und durch eine Öffnung des Lagerbocks 8 erstreckt, ohne von diesem unterstützt zu sein. Lediglich die zwei oberen Walzen 3L, 3R haben voneinander getrennte Wellen 10L, 10R, die unabhängig voneinander und nachgiebig in dem Lagerbock 8, sowie an den Seitenwänden des Gehäuses 1 gelagert sind. Die Welle 5 der Walze 2 ist an den Seitenwänden des Gehäuses 1 in (nicht dargestellten) nicht nachgiebigen Lagern gehalten. Die feste Lagerung der Walze 2 hat auf das Verhalten der Konditioniereinrichtung keinen nennenswerten Einfluss, denn selbst bei nachgiebiger Lagerung der Walze 2 wären es im Wesentlichen die kürzeren und leichteren Walzen 3L, 3R, die beim Durchgang eines Steins durch den Spalt 4 eine Ausweichbewegung ausführen würden.

### Bezugszeichen

- 1: Gehäuse
- 2: Konditionierwalze
- 3: Konditionierwalze
- 4: Spalt
- 5: Welle
- 6: Lager
- 7: Lager
- 8: Lagerbock
- 9: Kettenrad
- 10: welle
- 11: Häckselwerk
- 12: Messer
- 13: Häckseltrommel
- 14: Leitplatte
- 15: Leitplatte
- 16: Kanal
- 17: Trennwand
- 18: Keil
- 19: Grat
- 20: Ecke
- 21: Sammeltrichter
- 22: Nachbeechleuniger
- 23: Förderrichtung
- 24: Gegenschneide

## Patentansprüche

1. Feldhäcksler mit einer Konditioniereinrichtung mit einer ersten und einer zweiten einem Häckselwerk (11) zum Zerkleinern von Erntegut nachgelagerten Walze (2L; 3L), die in einem Erntegutkanal (16) angeordnet sind und einen von dem Erntegut durchlaufenen ersten Spalt (4) begrenzen, **dadurch gekennzeichnet, dass** wenigstens eine dritte, einen zweiten Spalt (4) begrenzende Walze (3R) in Querrichtung des Erntegutkanals (16) gegen die zweite Walze (3L) versetzt in dem Erntegutkanal (16) angeordnet ist.

2. Feldhäcksler nach Anspruch 1, **dadurch gekennzeichnet, dass** die erste Walze (2) den ersten und den zweiten Spalt begrenzt.

3. Feldhäcksler nach Anspruch 2, **dadurch gekennzeichnet, dass** die zweite und die dritte Walze (3L, 3R) nachgiebig gelagert sind.

4. Feldhäcksler nach Anspruch 1, **dadurch gekennzeichnet, dass** eine vierte Walze (2R) mit der dritten Walze (3R) den zweiten Spalt (4) begrenzt.

5. Feldhäcksler nach einem der vorhergehenden Ansprüche, **dadurch gekennzeichnet, dass** ein Lagerbock (8), der weinigstens die zweite Walze (3L) lagert, eine der zweiten Walze (3L) zugewandte Seite und eine von der zweiten Walze (3L) abgewandte Seite aufweist und dass der Erntegutkanal (16) auf beiden Seiten des Lagerbocks (8) verläuft.

6. Feldhäcksler nach Anspruch 5, **dadurch gekennzeichnet, dass** der Lagerbock (8) ferner wenigstens die dritte Walze (3R) lagert.

7. Feldhäcksler nach Anspruch 6, soweit auf Anspruch 4 rückbezogen, **dadurch gekennzeichnet, dass** der Lagerbock (8) ferner die erste und die vierte Walze (2L, 2R) lagert.

8. Feldbäcksler nach Anspruch 5 oder 7, **dadurch gekennzeichnet, dass** wenigstens zwei der von dem Lagerbock (8) gelagerten Walzen (3L, 3R) eine gemeinsame Drehachse haben.

9. Feldhäcksler nach Anspruch 8, **dadurch gekennzeichnet, dass** die Walzen (2L, 3L; 2R; 3R) mit gemeinsamer Drehachse auf einer gleichen Welle (5; 10) drehfest montiert sind.

10. Feldhäcksler nach Anspruch 8, soweit auf Anspruch 3 rückbezogen, **dadurch gekennzeichnet, dass** die zweite und die dritte Walze getrennte Wellen haben.

11. Feldhäckeler nach Anspruch 6, **dadurch gekennzeichnet, dass** die zweite und dritte Walze (3L; 3R) parallele, gegeneinander versetzte Drehachsen haben.

12. Feldhäcksler nach Anspruch 6, **dadurch gekennzeichnet, dass** wenigstens eine der von dem Lagerbock (8) gelagerten Walzen (2L; 3L; 2R; 3R) eine schräg zu einer Mittelebene des Erntegutkanals (16) aufgerichtete Achse hat.

13. Feldhäcksler nach einem der Ansprüche 5 bis 12, **dadurch gekennzeichnet, dass** dem Lagerbock (8) im Erntegutkanal (16) ein entgegen der Erntgutförderrichtung (23) zugespitzter Keil (18) vorgelagert ist.

14. Feldhäcksler nach Anspruch 13, **dadurch gekennzeichnet, dass** den Konditionierwalzen (2L; 3L; 2R; 3R) eine Häckseltrommel (13) vorgelagert ist und dass ein Grat (19) des Keils (18) wenigstens bis in unmittelbare Nähe des Umfangs der Häckseltrommel (13) reicht.

15. Feldhäcksler nach Anspruch 14, **dadurch gekennzeichnet, dass** der Grat (19) des Keils (18) kreiebogenförmig ist.

16. Feldhäcksler nach Anspruch 14 oder 15, **dadurch gekennzeichnet, dass** der Keil (18) sich zwischen den Erntegutkanal (16) oben und unten begrenzenden Leitplatten (14; 15) erstreckt, und dass ein oberes Ende (20) des Grates (19) über eine der Häckseltrommel (13) zugewandte Vorderkante der oberen Leitplatte (14) zur Häckseltrommel (13) hin vorspringt.

17. Feldhäcksler nach einem der vorhergehenden Ansprüche, **dadurch gekennzeichnet, dass** wenigstens zwei der Walzen (2L; 3L; 2R; 3R), die gemeinsam einen Spalt (4) begrenzen, schräg zu einer Mittelebene des Erntegutkanals (16) ausgerichtete Achsen haben, um den Spalt (4) durchlaufendes Erntegut in Richtung der Mittelebene zu lenken.

18. Feldhäcksler nach einem der vorhergehenden Ansprüche, **dadurch gekennzeichnet, dass** wenigstens zwei der Walzen (2L; 3L, 2R; 3R), die gemeinsam einen Spalt (4) begrenzen, zu einer Mittelebene des Erntegutkanals hin kegelig verjüngt sind.

19. Feldhäcksler nach Anspruch 17 oder 18, **dadurch gekennzeichnet, dass** den Walzen (2L, 3L; 2R, 3R) ein Sammeltrichter (21) für das Erntegut nachgeordnet ist.

## Claims

1. A forage harvester comprising a conditioning device having a first and a second roller (2L; 3L) mounted downstream of a chopping mechanism (11) for comminuting crop material, which rollers are arranged in a crop material passage (16') and define a first gap (4) through which the crop material passes, **characterised in that** at least one third roller (3R) defining a second gap (4) is arranged in the crop material passage (16) in displaced relationship in the transverse direction of the crop material passage (16) relative to the second roller (3L).

2. A forage harvester according to claim 1 **characterised in that** the first roller (2) defines the first and the second gaps.

3. A forage harvester according to claim 2 **characterised in that** the second and the third rollers (3L, 3R) are yieldingly mounted.

4. A forage harvester according to claim 1 **characterised in that** a fourth rollers (2R) with the third roller (3R) defines the second gap (4).

5. A forage harvester according to one of the preceding claims **characterised in that** a mounting block (8) which supports at least the second roller (3L) has a side towards the second roller (3L) and a side remote from the second roller (3L) and the crop material passage (16) extends on both sides of the mounting block (8).

6. A forage harvester according to claim 5 **characterised in that** the mounting block (8) further supports at least the third roller (3R).

7. A forage harvester according to claim 6 insofar as appended to claim 4 **characterised in that** the mounting block (8) further supports the first and the fourth rollers (2L, 2R).

8. A forage harvester according to claim 6 or claim 7 **characterised in that** at least two of the rollers (3L, 3R) supported by the mounting block (8) have a common axis of rotation.

9. A forage harvester according to claim 8 **characterised in that** the rollers (2L; 3L; 2R; 3R) are mounted non-rotatably with a common axis of rotation on the same shaft (5,10).

10. A forage harvester according to claim 8 insofar as appended to claim 3 **characterised in that** the second and the third rollers have separate shafts.

11. A forage harvester according to claim 6 **characterised in that** the second and third rollers (3L; 3R) have parallel, mutually displaced axes of rotation.

12. A forage harvester according to claim 6 **characterised in that** at least one of the rollers (2L; 3L; 2R; 3R) supported by the mounting block (8) has an axis oriented inclinedly relative to a central plane of the crop material passage (16).

13. A forage harvester according to one of claims 5 to 12 **characterised in that** mounted upstream of the mounting block (8) in the crop material passage (16) is a wedge (18) which is pointed in opposite relationship to the crop material conveyor direction (23).

14. A forage harvester according to claim 13 **characterised in that** a chopping drum (13) is mounted upstream of the conditioning rollers (2L; 3L; 2R; 3R) and that an edge (19) of the wedge (18) extends at least into the immediate proximity of the periphery of the chopping drum (13).

15. A forage harvester according to claim 14 **characterised in that** the edge (19) of the wedge (18) is in the shape of a circular arc.

16. A forage harvester according to claim 14 or claim 15 **characterised in that** the wedge (18) extends between guide plates (14; 15) defining the crop material passage (16) at top and bottom and an upper end (20) of the edge (19) projects beyond a front edge, that is towards the chopping drum (13), of the upper guide plate (14) towards the chopping drum (13).

17. A forage harvester according to one of the preceding claims **characterised in that** at least two of the rollers (2L; 3L; 2R; 3R) which jointly define a gap (4) have axes oriented inclinedly relative to a central plane of the crop material passage (16) to guide crop material passing through the gap (4) in the direction of the central plane.

18. A forage harvester according to one of the preceding claims **characterised in that** at least two of the rollers (2L; 3L; 2R; 3R) which jointly define a gap (4) are narrowed in a tapered configuration towards a central plane of the crop material passage.

19. A forage harvester according to claim 17 or claim 18 **characterised in that** a collecting hopper (21) for the crop material is arranged downstream of the rollers (2L, 3L, 2R, 3R).

## Revendications

1. Ensileuse avec un dispositif de conditionnement comportant un premier et un deuxième rouleau (2L ; 3L) placés après un système de hachage (11) prévu pour broyer un produit de récolte, qui sont disposés dans un conduit de produit de récolte (16) et délimitent une première fente (4) à travers laquelle passe le produit de récolte, **caractérisée en ce qu'**au moins un troisième rouleau (3R) délimitant une deuxième fente (4) est disposé dans le conduit de produit de récolte (16) en décalage par rapport au deuxième rouleau (3L) dans la direction transversale du conduit de produit de récolte (16).

2. Ensileuse selon la revendication 1, **caractérisée en ce que** le premier rouleau (2) délimite la première et la deuxième fente.

3. Ensileuse selon la revendication 2, **caractérisée en ce que** le deuxième et le troisième rouleau (3L, 3R) sont montés de manière flexible.

4. Ensileuse selon la revendication 1, **caractérisée en ce qu'**un quatrième rouleau (2R) délimite la deuxième fente (4) avec le troisième rouleau (3R) .

5. Ensileuse selon une des revendications précédentes, **caractérisée en ce qu'**un support de palier (8), qui supporte au moins le deuxième rouleau (3L), présente un côté tourné vers le deuxième rouleau (3L) et un côté opposé au deuxième rouleau (3L) et que le conduit de produit de récolte (16) s'étend des deux côtés du support de palier (8).

6. Ensileuse selon la revendication 5, **caractérisée en ce que** le support de palier (8) supporte également au moins le troisième rouleau (3R).

7. Ensileuse selon la revendication 6, pour autant qu'elle dépend de la revendication 4, **caractérisée en ce que** le support de palier (8) supporte également le premier et le quatrième rouleau (2L, 2R).

8. Ensileuse selon la revendication 6 ou 7, **caractérisée en ce qu'**au moins deux des rouleaux (3L ; 3R) supportés par le support de palier (8) ont un axe de rotation commun.

9. Ensileuse selon la revendication 8, **caractérisée en ce que** les rouleaux (2L ; 3L ; 2R ; 3R) ayant un axe de rotation commun sont montés de manière solidaire en rotation sur un même arbre (5 ; 10) .

10. Ensileuse selon la revendication 8, pour autant qu'elle dépend de la revendication 3, **caractérisée en ce que** le deuxième et le troisième rouleau ont des arbres distincts.

11. Ensileuse selon la revendication 6, **caractérisée en ce que** le deuxième et le troisième rouleau (3L ; 3R) ont des axes de rotation parallèles, décalés l'un par rapport à l'autre.

12. Ensileuse selon la revendication 6, **caractérisée en ce qu'**au moins un des rouleaux (2L ; 3L ; 2R ; 3R) supportés par le support de palier (8) a un axe orienté obliquement par rapport à un plan médian du conduit de produit de récolte (16) .

13. Ensileuse selon une des revendications 5 à 12, **caractérisée en ce qu'**un coin (18) effilé à l'opposé du sens de transport de produit de récolte (23) est placé avant le support de palier (8) dans le conduit de produit de récolte (16) .

14. Ensileuse selon la revendication 13, **caractérisée en ce qu'**un tambour de hachage (13) est placé avant les rouleaux conditionneurs (2L ; 3L ; 2R ; 3R) et qu'une arête (19) du coin (18) s'étend au moins jusqu'à proximité immédiate de la circonférence du tambour de hachage (13).

15. Ensileuse selon la revendication 14, **caractérisée en ce que** l'arête (19) du coin (18) est en forme d'arc de cercle.

16. Ensileuse selon la revendication 14 ou 15, **caractérisée en ce que** le coin (18) s'étend entre des plaques de guidage (14 ; 15) qui limitent en haut et en bas le conduit de produit de récolte (16), et qu'une extrémité supérieure (20) de l'arête (19) fait saillie en direction du tambour de hachage (13) au-delà d'un bord avant de la plaque de guidage supérieure (14) tourné vers le tambour de hachage.

17. Ensileuse selon une des revendications précédentes, **caractérisée en ce qu'**au moins deux des rouleaux (2L ; 3L ; 2R ; 3R) qui délimitent ensemble une fente (4) ont des axes orientés obliquement par rapport à un plan médian du conduit de produit de récolte (16) pour guider le produit de récolte qui passe par la fente (4) en direction du plan médian.

18. Ensileuse selon une des revendications précédentes, **caractérisée en ce qu'**au moins deux des rouleaux (2L; 3L; 2R; 3R) qui délimitent ensemble une fente (4) sont effilés en cône en direction d'un plan médian du conduit de produit de récolte.

19. Ensileuse selon la revendication 17 ou 18, **caractérisée en ce qu'**un entonnoir collecteur (21) pour le produit de récolte est placé après les rouleaux (2L, 3L ; 2R, 3R).
